# FASCICULE DE BREVET EUROPEEN

(11) **EP 4 055 238 B1**
(45) Date de publication et mention de la délivrance du brevet: **13.12.2023**
(21) Numéro de dépôt: 20792428.3
(22) Date de dépôt: 20.10.2020
(51) Int. Cl.: E04G 21/04, G01S 15/88, G01V 1/00

(54) **POMPE À BÉTON ÉQUIPÉE DE MOYENS DE DÉTECTION DE DANGERS**
BETONPUMPE MIT GEFAHRENDETEKTOR
CONCRETE PUMP EQUIPPED WITH HAZARD DETECTION MEANS

(30) Priorité: 04.11.2019 FR 1912331
(43) Date de publication de la demande: 14.09.2022
(73) Titulaire: Quali Parts & Services, 82170 Montbequi (FR)
(72) Inventeur: MORGADO, Nelson, 66200 Latour Bas Elne (FR)
(74) Mandataire: Macquet, Christophe
(86) Numéro de dépôt international: PCT/EP2020/079446
(87) Numéro de publication internationale: WO 2021/089316

(56) Documents cités:
- WO-A1-2016/016305
- DE-A1- 10 320 382
- DE-A1-102008 017 961
- US-B1- 6 202 013

## Description

La présente invention concerne une pompe à béton équipée de moyens de détection de dangers.

Dans le domaine des travaux publics, on connaît des pompes à béton qui sont destinées à délivrer du béton sur un lieu de livraison du béton. La pompe à béton comprend un faux-châssis équipé d'une trémie pour la réception du béton produit par une bétonnière et une machine de pompage du béton qui est prévue pour convoyer le béton depuis la trémie vers le lieu de livraison du béton. La machine de pompage comprend un canal muni de tuyaux et d'un flexible à l'intérieur desquels le béton circule et des moyens de pompage pour propulser le béton à l'intérieur des tuyaux et du flexible.

Le lieu de livraison du béton est susceptible d'être éloigné d'un lieu de stabilisation possible pour la pompe à béton. Aussi, la pompe à béton comprend une flèche articulée porteur des tuyaux et du flexible qui est apte à être déployée entre la pompe à béton et le lieu de livraison du béton. La flèche articulée en position déployée est couramment d'une longueur de plusieurs dizaines de mètres. On pourra par exemple se reporter au document EP3556718 qui décrit une pompe à béton du genre susvisé.

De telles pompes à béton subissent régulièrement des accidents qui sont dus à la présence de plusieurs dangers existants dans un environnement dans lequel se trouve la pompe à béton.

Un premier danger réside en un manque de stabilisation de la pompe à béton qui est susceptible de provoquer un renversement de la pompe à béton. Il est connu d'équiper la pompe à béton de pieds stabilisateurs qui sont aptes à se positionner de part et d'autre d'un axe longitudinal de la pompe à béton entre cette dernière et le sol. Il n'en demeure pas moins que ces pieds sont susceptibles d'être mal positionnés et d'être inaptes à empêcher un renversement préjudiciable de la pompe à béton.

Un deuxième danger réside dans la nature du sol sur lequel repose la pompe à béton. En effet, le sol est susceptible de renfermer des cavités plus ou moins nombreuses et vastes qui peuvent provoquer un effondrement du sol lorsque la pompe à béton, chargée en béton notamment, est placée au-dessus. Un tel effondrement du sol est aussi susceptible de provoquer un renversement préjudiciable de la pompe à béton.

Un troisième danger réside dans la présence de vent qui est susceptible d'exercer une force importante sur la flèche articulée de la pompe à béton. Une telle force peut aussi provoquer un renversement préjudiciable de la pompe à béton, notamment lorsque le vent atteint une vitesse égale ou supérieure à 70 km/h.

Un quatrième danger réside dans la présence de lignes électriques à proximité de la pompe à béton. De telles lignes électriques forment un champ magnétique dans leur environnement qui est susceptible de créer un arc électrique avec la flèche articulée si cette dernière pénètre dans cet environnement. L'arc électrique généré est susceptible de détériorer la pompe à béton, voire de provoquer des brûlures ou électrocutions d'un utilisateur de la pompe à béton et/ou de personnes présentes à proximité. WO 2016/016305 A1 divulgue une pompe à béton avec plusieurs dispositifs de détection.

La présente invention a pour but de proposer une pompe à béton qui permet de se prémunir contre l'ensemble de ces dangers.

Une pompe à béton de la présente invention est une pompe à béton comprenant un premier châssis équipé d'une trémie destinée à recevoir le béton, de pieds de stabilisation de la pompe à béton et d'une tourelle porteuse d'une flèche articulée comportant une pluralité de bras. La flèche articulée est porteuse d'au moins une conduite destinée à véhiculer le béton entre la trémie et un lieu de livraison du béton. Le premier châssis est couramment dénommé faux châssis.

Selon la présente invention, la pompe à béton est équipée d'un premier dispositif de détection de cavités dans le sol, d'un deuxième dispositif de détection d'une inclinaison d'au moins un bras par rapport à un axe vertical, d'un troisième dispositif de détection d'un déploiement des pieds, d'un quatrième dispositif de détection d'une assiette de la pompe à béton et d'un capteur de rotation équipant la tourelle.

La pompe à béton comprend avantageusement l'une quelconque au moins des caractéristiques techniques suivantes prises seules ou en combinaison :
- la pompe à béton comprend des moyens de calcul à partir fournies par le premier dispositif de détection, par le deuxième dispositif de détection, par le troisième dispositif de détection, par le quatrième dispositif de détection et par le capteur de rotation pour déterminer un centre de gravité de la pompe à béton et vérifier si le centre de gravité de la pompe à béton est contenu à l'intérieur d'un volume préalablement déterminé,
- les moyens de calcul sont configurés pour déterminer si le centre de gravité de la pompe à béton est contenu à l'intérieur d'un périmètre borné par des extrémités respectives des pieds,
- la pompe à béton est équipée d'un cinquième dispositif de détection d'un agglomérat de béton à l'intérieur de la conduite,
- la pompe à béton est équipée d'un sixième dispositif de détection de lignes électriques.
- la pompe à béton est équipée d'un anémomètre,
- les moyens de calcul sont en relation avec des moyens d'alerte qui sont aptes à délivrer une information d'alerte à un utilisateur de la pompe à béton et/ou à bloquer un fonctionnement de la pompe à béton,
- la pompe à béton est équipée de roues,
- la pompe à béton est équipée de chenilles,
- la pompe à béton est une remorque destinée à être tractée par un véhicule automobile comprenant un deuxième châssis apte à recevoir par fixation le premier châssis.

L'invention sera mieux comprise à la lecture de la description non limitative qui suit, rédigée au regard des dessins annexés, dans lesquels :
[Fig. 1] - la figure 1 représente schématiquement une première vue de côté de la pompe à béton de la présente invention qui comprend une flèche en position repliée.
[Fig. 2] - la figure 2 représente schématiquement une deuxième vue de côté de la pompe à béton illustrée sur la figure 1 dans laquelle la flèche est placée en position d'utilisation.
[Fig. 3] - la figure 3 représente schématiquement une vue de dessus de la pompe à béton illustrée sur les figures 1 et 2.
[Fig. 4] - la figure 4 représente schématiquement des moyens de calcul que comprend la pompe à béton illustrée sur les figures précédentes.

Sur les figures, est représentée une pompe à béton 1 selon la présente invention. La pompe à béton 1 comprend un premier châssis 2a qui est, selon l'exemple illustré, porté par un deuxième châssis 2b d'un véhicule. Le premier châssis 2a de la pompe à béton 1 est couramment dénommé faux-châssis et est apte à être rapporté sur le deuxième châssis 2b du véhicule. Le véhicule est pourvu d'une cabine 4 et de moyens de motorisation pour permettre son déplacement.

La pompe à béton 1 est équipé de roues 3 pour permettre son roulage. Selon une autre variante de réalisation, la pompe à béton 1 est munie de chenilles qui permettent un déplacement de la pompe à béton 1 sur un sol plus chaotique.

Le premier châssis 2a est équipé d'une trémie 5 destinée à recevoir le béton en provenance d'une bétonnière par exemple. La trémie 5 est notamment fixée à l'arrière du premier châssis 2a.

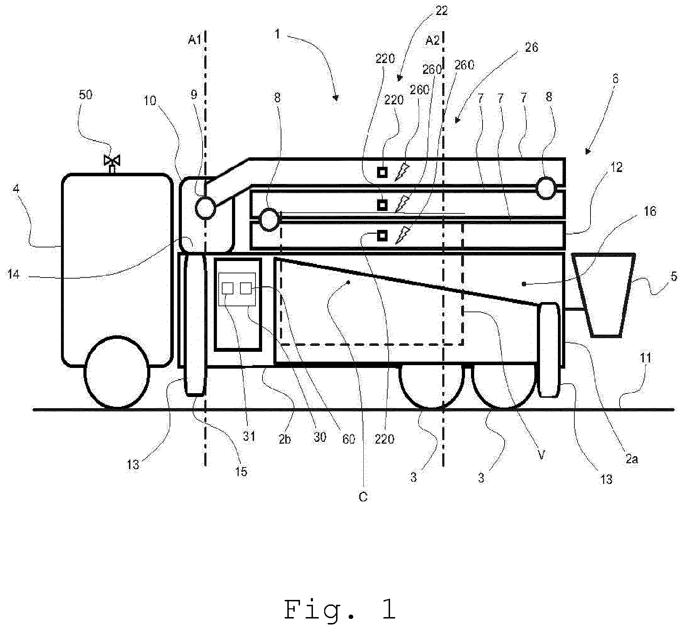

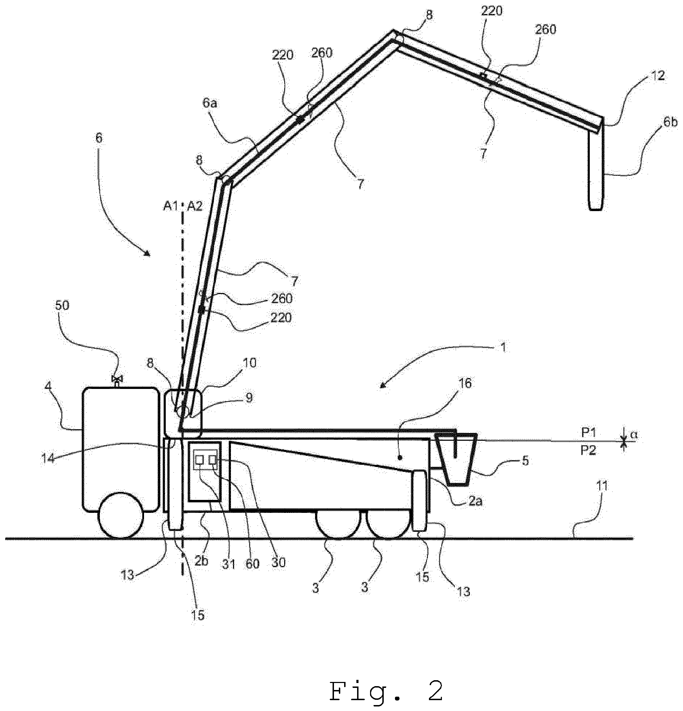

Le premier châssis 2a est aussi équipé d'une flèche 6 qui est porteuse d'une conduite 6a, représentée schématiquement sur la figure 2. La conduite 6a est notamment un assemblage de tuyaux à l'intérieur desquels le béton est à même de circuler depuis la trémie 5 jusqu'à un lieu de livraison du béton situé sur un chantier. Pour faciliter une délivrance du béton sur le lieu de livraison, une extrémité de la conduite 6a est équipée d'un flexible 6b. La flèche 6 est préférentiellement articulée et comporte à cet effet une pluralité de bras 7 joints deux à deux par leurs extrémités respectives. Aussi, la flèche 6 est mobile entre une position de rangement, telle que représentée sur la figure 1, dans laquelle la flèche 6 est repliée et une position d'utilisation, telle que représentée sur la figure 2, dans laquelle la flèche 6 est déployée. A cet effet, les bras 7 sont pourvus de moyens d'articulation 8 de deux bras 7 deux à deux. Selon l'exemple illustré, le nombre de bras 7 que comporte la flèche 6 est égal à trois mais ce nombre est susceptible d'être quelconque. La flèche 6 comporte une extrémité proximale 9 qui est relié à une tourelle 10. La tourelle 10 est mobile en rotation sur elle-même sur le premier châssis 2a autour d'un axe de rotation A1 sensiblement orthogonal à une surface du sol 11 sur lequel la pompe à béton 1 repose. Ces dispositions sont telles que, lorsque la flèche 6 est déployée, une extrémité distale 12 de la flèche 6, opposée à l'extrémité proximale 9, est apte à atteindre le lieu de livraison du béton relativement éloigné.

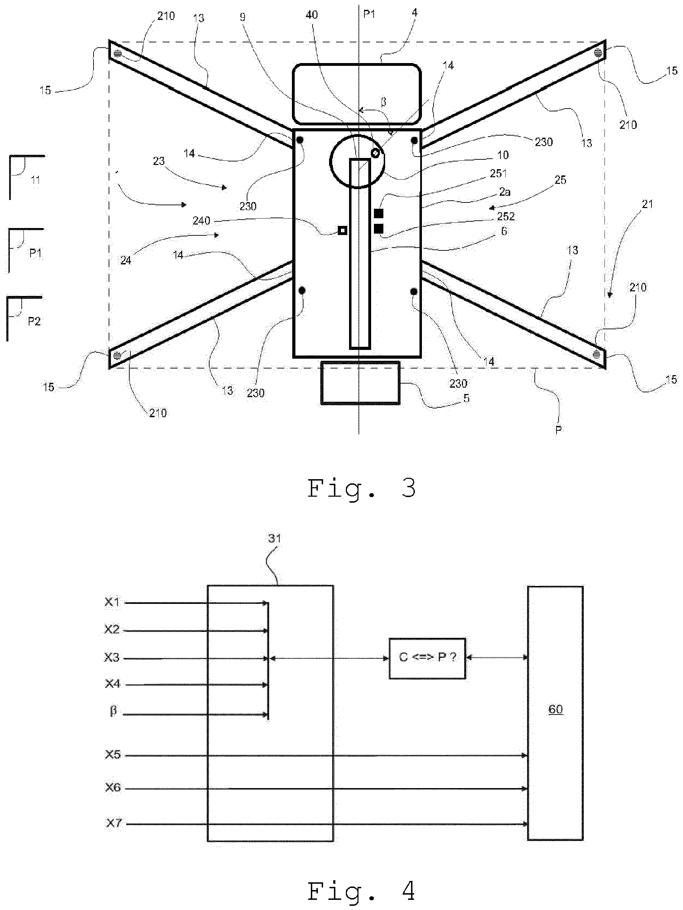

Le premier châssis 2 est aussi équipé d'une pluralité de pieds 13 qui sont mobiles entre une position repliée, représentée sur les figures 1 et 2, et une position déployée, représentée sur la figure 3. En position repliée, une première extrémité 14 de chaque pied 13 est reliée au châssis 1 tandis qu'une deuxième extrémité 15 du même pied 13 est libre. En position déployée, la première extrémité 14 de chaque pied 13 est reliée au châssis 2 tandis que la deuxième extrémité 15 du même pied 13 repose sur la surface du sol 11. De préférence, les pieds 13 sont télescopiques pour être aisément modifiés entre la position déployée et la position repliée et vice-versa.

Le premier châssis 2a est aussi équipé de moyens de pompage 16 du béton qui est prévue pour convoyer le béton depuis la trémie 5 vers le lieu de livraison du béton.

Afin d'éviter un renversement de la pompe à béton 1, la pompe à béton 1 est équipée d'un premier dispositif de détection 21 de cavités dans le sol, tel qu'un sonar ou analogue. Le premier dispositif de détection 21 est notamment apte à sonder le sol jusqu'à une profondeur de cinq mètres pour identifier une ou plusieurs cavités et déterminer si le sol est à même de supporter une pression exercée par la pompe à béton 1 ainsi que des secousses provoquées par les moyens de pompage 16. De préférence, le premier dispositif de détection 21 comprend des capteurs sonar ou analogue 210 qui équipent chacun des pieds 13, et plus particulièrement la deuxième extrémité 15 de chacun des pieds 13 pour être disposé au plus près de la surface du sol 11. Le premier dispositif de détection 21 est apte à fournir une première information X1 relative à la présence de cavités dans le sol.

De plus, la pompe à béton 1 est équipée d'un deuxième dispositif de détection 22 d'une inclinaison de la flèche 6 par rapport à un axe vertical A2, parallèle à la gravité terrestre et parallèle à l'axe de rotation A1. Le deuxième dispositif de détection 22 comprend une pluralité de capteurs d'inclinaison verticale 220 qui équipent chacun des bras 7. Les capteurs d'inclinaison verticale 220 sont par exemple disposés au milieu de chacun des bras 7. Les capteurs d'inclinaison verticale 220 sont par exemple des capteurs aptes à mesurer une inclinaison de chaque bras 7 par rapport à l'axe vertical A2. Le deuxième dispositif de détection 22 est apte à fournir une deuxième information X2 relative à l'inclinaison verticale des bras 7 de la flèche 6.

De plus, la pompe à béton 1 est équipée d'un troisième dispositif de détection 23 d'un déploiement des pieds 13. Le troisième dispositif de détection 23 comprend une pluralité de capteurs de position 230 qui équipent par exemple le premier châssis 2a, à proximité de la première extrémité 14 des pieds 13. Les capteurs de position 230 sont par exemple des capteurs optiques, laser notamment ou analogue, qui mesurent une distance entre le premier châssis 2a et la deuxième extrémité 15 des pieds 13, voire un angle ménagé entre chaque pied 13 et le premier châssis 2a. Le troisième dispositif de détection 23 est apte à fournir une troisième information X3 relative à un déploiement des pieds 13.

De plus, la pompe à béton 1 est équipée d'un quatrième dispositif de détection 24 d'une assiette de la pompe à béton 1 par rapport à un plan horizontal P1, orthogonal à une direction de la gravité terrestre et à l'axe vertical A2. Le quatrième dispositif de détection 24 comprend au moins un capteur d'inclinaison verticale 240 qui est apte à mesurer un angle d'inclinaison α formé entre le plan horizontal P1 et un plan d'extension générale P2 de la pompe à pompe à béton 1. On note que sur la figure 2, l'angle d'inclinaison α est nul, le plan horizontal P1 et le plan d'extension général P2 de la pompe à pompe à béton 1 étant confondus. Le quatrième dispositif de détection 24 est apte à fournir une quatrième information X4 relative à l'assiette de la pompe à béton 1.

De plus, la tourelle 10 est équipée d'un capteur de rotation 40 qui est apte à déterminer un angle de rotation β de la tourelle 10 et/ou du bras 6 que la tourelle porte par rapport à un plan longitudinal P1 de la pompe à béton 1.

La pompe à béton 1 est équipée d'une unité centrale 30 qui comprend des moyens de calcul 31 apte à déterminer une position d'un centre de gravité C de la pompe à béton 1 et à vérifier si le centre de gravité C de la pompe à béton 1 est contenu ou non à l'intérieur d'un volume V préalablement déterminé. Le volume V est au moins borné par un périmètre P qui est défini en reliant les deuxièmes extrémités 15 des pieds 13. L'unité centrale 30 est en relation avec le premier dispositif de détection 21, le deuxième dispositif de détection 22, le troisième dispositif de détection 23, le quatrième dispositif de détection 24 et le capteur de rotation 40. Les moyens de calcul 31 sont des moyens permettant une gestion dynamique de la position du centre de gravité C de la pompe à béton 1. De préférence, les moyens de calcul 31 font appel à une technologie d'intelligence artificielle pour bénéficier de procédure d'apprentissage de calculs antérieurs. Dans le cas-où le centre de gravité C de la pompe à béton 1 est contenu à l'intérieur du volume V, et plus particulièrement à l'intérieur du périmètre P, la pompe à béton 1 est rendue opérationnelle. Dans le cas contraire, la pompe à béton 1 est rendue inopérante ou limitée, notamment à partir d'une intervention sur les moyens de pompage 16 et/ou sur une possibilité de déploiement de la flèche 6. Ces dispositions visent à éviter un renversement de la pompe à béton 1.

Par ailleurs, la pompe à béton 1 est équipée d'un cinquième dispositif de détection 25 d'un agglomérat de béton à l'intérieur de la conduite 6a. Selon une variante de réalisation, le cinquième dispositif de détection 25 comprend un premier capteur de pression hydraulique 251 disposé en entrée des moyens de pompage 16 et un deuxième capteur de pression hydraulique 252 placé en sortie des moyens de pompage 16. Le cinquième dispositif de détection 25 est en relation avec les moyens de calcul 31 qui sont aptes à déterminer si une différence de pression X5 déterminée entre une première pression mesurée par le premier capteur de pression hydraulique 251 et une deuxième pression mesurée par le deuxième capteur de pression hydraulique 252 indique la présence d'un agglomérat de béton à l'intérieur de la conduite 6a. Si c'est le cas, la pompe à béton 1 peut être rendue inopérante ou une procédure de dégagement de l'agglomérat par modifications successives de la pression des moyens de pompage 16 gérés par l'unité centrale 30.

Par ailleurs, la pompe à béton 1 est équipée d'un sixième dispositif de détection 26 de lignes électriques dans un rayon de proximité afin d'éviter que la flèche 6 soit présente à l'intérieur d'une zone où un arc électrique généré par les lignes électriques est susceptible d'endommager la pompe à béton 1. Le sixième dispositif de détection 26 comprend notamment une pluralité de capteurs de présence 260 de lignes électriques. Le sixième dispositif de détection 26 est en relation avec les moyens de calcul 31 qui sont aptes à déterminer si une distance X6 entre la flèche 6 et les lignes électriques atteint une distance de sécurité qui est de l'ordre de six mètres pour une ligne électrique haute tension et de l'ordre de trois mètres pour une ligne électrique basse tension.

Par ailleurs, la pompe à béton 1 est équipée d'un anémomètre 50 qui est à même de mesurer une vitesse X7 d'un vent qui frappe la pompe à béton 1. L'anémomètre 50 équipe par exemple la cabine 4 du véhicule mais est susceptible d'être positionné en un endroit quelconque de la pompe à béton 1. L'anémomètre 50 est en relation avec les moyens de calcul 31 qui sont également aptes à déterminer si, selon la vitesse du vent mesuré par l'anémomètre 50, la flèche 6 peut être déployée ou non.

Les moyens de calcul 31 sont en relation avec des moyens d'alerte 60 qui sont aptes à délivrer une information d'alerte à un utilisateur de la pompe à béton 1 et/ou à bloquer et/ou à limiter un fonctionnement de la pompe à béton 1.

En se reportant sur la figure 4, les moyens de calcul 31 sont configurés pour informer un utilisateur d'un danger de renversement de la pompe à béton 1 à partir des informations X1, X2, X3, X4, β, respectivement recueillis par le premier dispositif de détection 21, le deuxième dispositif de détection 22, le troisième dispositif de détection 23, le quatrième dispositif de détection 24 et le capteur de rotation 40.

Par ailleurs, les moyens de calcul 31 sont configurés pour informer un utilisateur d'un danger d'obstruction de la conduite 6a à partir de la différence de pression X5 identifiée.

Par ailleurs encore, les moyens de calcul 31 sont configurés pour informer un utilisateur d'un danger électromagnétique à partir de la distance X6 entre la flèche 6 et les lignes électriques.

Enfin, les moyens de calcul 31 sont configurés pour informer un utilisateur d'un danger de renversement de la pompe à béton 1 à partir de la vitesse X7 du vent qui frappe la pompe à béton 1.

## Revendications

1. Pompe à béton (1) comprenant un premier châssis (2a) équipé d'une trémie (5) destinée à recevoir le béton, de pieds (13) de stabilisation de la pompe à béton (1) et d'une tourelle (10) porteuse d'une flèche articulée (6) comportant une pluralité de bras (7), la flèche articulée (6) étant porteuse d'au moins une conduite (6a) destinée à véhiculer le béton entre la trémie (5) et un lieu de livraison du béton, la pompe à béton (1) est équipée d'un premier dispositif de détection (21) de cavités dans le sol, d'un deuxième dispositif de détection (22) d'une inclinaison d'au moins un bras (7) par rapport à un axe vertical (A2), d'un troisième dispositif de détection (23) d'un déploiement des pieds (13), d'un quatrième dispositif de détection (24) d'une assiette de la pompe à béton (1) et d'un capteur de rotation (40) équipant la tourelle (10).

2. Pompe à béton (1) selon la revendication 1, **caractérisée en ce que** la pompe à béton (1) comprend des moyens de calcul (31) à partir d'informations (X1, X2, X3, X4, β) fournies par le premier dispositif de détection (21), par le deuxième dispositif de détection (22), par le troisième dispositif de détection (23), par le quatrième dispositif de détection (24) et par le capteur de rotation (40) pour déterminer un centre de gravité (C) de la pompe à béton (1) et vérifier si le centre de gravité (C) de la pompe à béton (1) est contenu à l'intérieur d'un volume (V) préalablement déterminé.

3. Pompe à béton (1) selon la revendication 2, **caractérisée en ce que** les moyens de calcul (31) sont configurés pour déterminer si le centre de gravité (C) de la pompe à béton (1) est contenu à l'intérieur d'un périmètre (P) borné par des extrémités respectives (15) des pieds (13).

4. Pompe à béton (1) selon l'une quelconque des revendications précédentes, **caractérisée en ce que** la pompe à béton (1) est équipée d'un cinquième dispositif de détection (25) d'un agglomérat de béton à l'intérieur de la conduite (6a).

5. Pompe à béton (1) selon l'une quelconque des revendications précédentes, **caractérisée en ce que** la pompe à béton (1) est équipée d'un sixième dispositif de détection (26) de lignes électriques.

6. Pompe à béton (1) selon l'une quelconque des revendications précédentes, **caractérisée en ce que** la pompe à béton (1) est équipée d'un anémomètre (50).

7. Pompe à béton (1) selon l'une quelconque des revendications précédentes, **caractérisée en ce que** les moyens de calcul (31) sont en relation avec des moyens d'alerte (60) qui sont aptes à délivrer une information d'alerte à un utilisateur de la pompe à béton (1) et/ou à bloquer un fonctionnement de la pompe à béton (1).

8. Pompe à béton (1) selon l'une quelconque des revendications précédentes, **caractérisée en ce que** la pompe à béton (1) est équipée de roues (3).

9. Pompe à béton (1) selon l'une quelconque des revendications 1 à 7, **caractérisée en ce que** la pompe à béton (1) est équipée de chenilles.

10. Pompe à béton (1) selon l'une quelconque des revendications précédentes, **caractérisée en ce que** la pompe à béton (1) est une remorque destinée à être tractée par un véhicule automobile comprenant un deuxième châssis (2b) apte à recevoir par fixation le premier châssis (2a).

## Patentansprüche

1. Betonpumpe (1), umfassend ein erstes Fahrgestell (2a), der mit einem Trichter (5) ausgestattet ist, der dazu bestimmt ist, Beton aufzunehmen, Füße (13) zur Stabilisierung der Betonpumpe (1) und eines Turms (10), der einen Gelenkausleger (6) mit einer Vielzahl von Armen (7) trägt, wobei der Gelenkausleger (6) mindestens ein Rohr (6a) trägt, das dazu bestimmt ist, den Beton zwischen dem Trichter (5) und einem Ablieferungsort des Betons zu befördern, wobei die Betonpumpe (1) mit mindestens einer ersten Detektionsvorrichtung (21) für Hohlräume im Boden, einer zweiten Detektionsvorrichtung (22) für eine Neigung mindestens eines Arms (7) in Bezug auf eine vertikale Achse (A2), einer dritten Detektionsvorrichtung (23) für ein Ausfahren der Füße (13), einer vierten Detektionsvorrichtung (24) für den Trimm der Betonpumpe (1) und einem Rotationssensor (40), mit dem der Turm (10) ausgestattet ist, ausgestattet ist.

2. Betonpumpe (1) nach Anspruch 1, **dadurch gekennzeichnet, dass** die Betonpumpe (1) ein Berechnungsmittel (31) auf der Grundlage von Informationen (X1, X2, X3, X4, β) umfasst, die von der ersten Detektionsvorrichtung (21), der zweiten Detektionsvorrichtung (22), der dritten Detektionsvorrichtung (23), der vierten Detektionsvorrichtung (24) und dem Rotationssensor (40) geliefert werden, um einen Schwerpunkt (C) der Betonpumpe (1) zu bestimmen und zu prüfen, ob der Schwerpunkt (C) der Betonpumpe (1) innerhalb eines zuvor bestimmten Volumens (V) enthalten ist.

3. Betonpumpe (1) nach Anspruch 2, **dadurch gekennzeichnet, dass** das Berechnungsmittel (31) dazu konfiguriert ist, zu bestimmen, ob der Schwerpunkt (C) der Betonpumpe (1) innerhalb eines durch die jeweiligen Enden (15) der Füße (13) begrenzten Umfangs (P) enthalten ist.

4. Betonpumpe (1) nach einem der vorhergehenden Ansprüche, **dadurch gekennzeichnet, dass** die Betonpumpe (1) mit einer fünften Detektionsvorrichtung (25) für ein Betonagglomerat im Rohr (6a) ausgestattet ist.

5. Betonpumpe (1) nach einem der vorhergehenden Ansprüche, **dadurch gekennzeichnet, dass** die Betonpumpe (1) mit einer sechsten Detektionsvorrichtung (26) für elektrische Leitungen ausgestattet ist.

6. Betonpumpe (1) nach einem der vorhergehenden Ansprüche, **dadurch gekennzeichnet, dass** die Betonpumpe (1) mit einem Anemometer (50) ausgestattet ist.

7. Betonpumpe (1) nach einem der vorhergehenden Ansprüche, **dadurch gekennzeichnet, dass** das Berechnungsmittel (31) mit einem Warnmittel (60) verbunden ist, das dazu ausgelegt ist, einem Benutzer der Betonpumpe (1) eine Warninformation zu übermitteln und/oder den Betrieb der Betonpumpe (1) zu blockieren.

8. Betonpumpe (1) nach einem der vorhergehenden Ansprüche, **dadurch gekennzeichnet, dass** die Betonpumpe (1) mit Rädern (3) ausgestattet ist.

9. Betonpumpe (1) nach einem der Ansprüche 1 bis 7, **dadurch gekennzeichnet, dass** die Betonpumpe (1) mit Raupenketten ausgestattet ist.

10. Betonpumpe (1) nach einem der vorhergehenden Ansprüche, **dadurch gekennzeichnet, dass** die Betonpumpe (1) ein Anhänger ist, der dazu bestimmt ist, von einem Kraftfahrzeug gezogen zu werden, das ein zweites Fahrgestell (2b) umfasst, das dazu ausgelegt ist, das erste Fahrgestell (2a) durch Befestigung aufzunehmen.

## Claims

1. Concrete pump (1) comprising a first chassis (2a) equipped with a hopper (5) intended to receive the concrete, feet (13) for stabilizing the concrete pump (1) and a turret (10) carrying an articulated boom (6) including a plurality of arms (7), the articulated boom (6) carrying at least one pipe (6a) intended to convey the concrete between the hopper (5) and a concrete delivery location, **characterized in that** the concrete pump (1) is equipped with a first device (21) for detecting cavities in the ground, a second device (22) for detecting an inclination of at least one arm (7) with respect to a vertical axis (A2), a third device (23) for detecting a deployment of the feet (13), a fourth device (24) for detecting the trim of the concrete pump (1) and a rotation sensor (40) equipping the turret (10).

2. Concrete pump (1) according to claim 1, **characterized in that** the concrete pump (1) comprises means (31) for computing from information (X1, X2, X3, X4, β) supplied by the first detection device (21), by the second detection device (22), by the third detection device (23), by the fourth detection device (24) and by the rotation sensor (40) to determine a center of gravity (C) of the concrete pump (1) and to check that the center of gravity (C) of the concrete pump (1) is contained within a previously determined volume (V)

3. Concrete pump (1) according to claim 2, **characterized in that** the computing means (31) are configured for determining whether the center of gravity (C) of the concrete pump (1) is contained within an area (P) bounded by the respective ends (15) of the feet (13).

4. Concrete pump (1) according to any one of the preceding claims, **characterized in that** the concrete pump (1) is equipped with a fifth device (25) for detecting a concrete agglomerate inside the pipe (6a).

5. Concrete pump (1) according to any one of the preceding claims, **characterized in that** the concrete pump (1) is equipped with a sixth device (26) for detecting electric lines.

6. Concrete pump (1) according to any one of the preceding claims, **characterized in that** the concrete pump (1) is equipped an anemometer (50).

7. Concrete pump (1) according to any one of the preceding claims, **characterized in that** the computing means (31) are connected with alert means (60) that are able to deliver alert information to a user of the concrete pump (1) and/or to block operation of the concrete pump (1).

8. Concrete pump (1) according to any one of the preceding claims, **characterized in that** the concrete pump (1) is equipped with wheels (3).

9. Concrete pump (1) according to any one of claims 1 to 7, **characterized in that** the concrete pump (1) is equipped with tracks.

10. Concrete pump (1) according to any one of the preceding claims, **characterized in that** the concrete pump (1) is a trailer intended to be pulled by a motor vehicle comprising a second chassis (2b) able to receive the first chassis (2a) by securing.
